(19) Europäisches Patentamt
European Patent Office
Office européen des brevets

(11) Publication number: 0 082 577
A1

(12) # EUROPEAN PATENT APPLICATION

(21) Application number: 82201635.8

(22) Date of filing: 20.12.82

(51) Int. Cl.$^3$: A 01 N 47/04
//(A01N47/04, 37/46)

(30) Priority: 22.12.81 GB 8138507

(43) Date of publication of application: 29.06.83 Bulletin 83/26

(84) Designated Contracting States: AT BE CH DE FR GB IT LI LU NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Dunn, Christopher Lawrence
132 Sterling Road
Tunstall Sittingbourne Kent(GB)

(74) Representative: Rogers, Roy Charles et al,
4 York Road
London SE1 7NA(GB)

(54) **Fungicidal composition and method of combating fungal growth.**

(57) A fungicidal composition which comprises N-hydroxy-N-formylalanine or a salt or an ester thereof, together with N-(trichloromethylthio)phthalimide. The composition is especially useful for the treatment of vines.

EP 0 082 577 A1

K 1853

# FUNGICIDAL COMPOSITION AND METHOD OF COMBATING FUNGAL GROWTH

This invention relates to fungicidal compositions and a method of combating fungal growth.

N-hydroxy-N-formylalanine and its salts and esters are useful as fungicides, as disclosed in European Patent Application Publication No. 0057027.

N-(trichloromethylthio)phthalimide is a known fungicide useful, for example, against grape disease.

It has been shown that if applied under certain conditions, while acting as an effective fungicide N-hydroxy-N-formylalanine and its salts and esters can be harmful to plants: a high dosage can cause some phytotoxicity on leaves directly sprayed.

The Applicants have now found that mixtures of N-hydroxy-N-formylalanine or its salts and esters with N-(trichloromethylthio)phthalimide give unexpectedly effective control of fungi together with negligible phytotoxicity.

The present invention therefore provides a fungicidal composition which comprises a compound I which is N-hydroxy-N-formylalanine, which has the formula

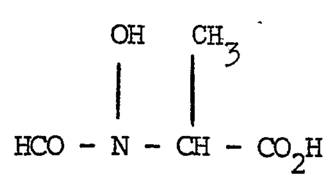

or a salt or an ester thereof, together with compound II, N-

(trichloromethylthio)phthalimide, which has the formula

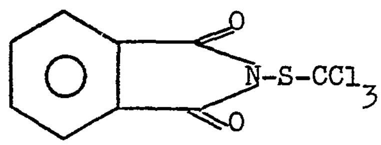

A salt of the acid I may contain the monovalent anion in which the carboxyl group is ionised or the divalent anion in which the N-hydroxy group is also ionised. Polyvalent metal ions generally form salts with, or chelates derived from, the divalent anion, while monovalent metal ions can form mono- or divalent salts. Weak bases in general form only monovalent salts.

Typical metal salts include salts of lithium, sodium, potassium, magnesium, calcium, zinc, copper, lead, manganese or iron.

Typical non-metal salts include ammonium and substituted ammonium salts, for example those in which the cation has the formula $^{\oplus}NR^4R^5R^6R^7$ in which each of $R^4$, $R^5$, $R^6$ and $R^7$ independently represents a hydrogen atom or an optionally substituted alkyl, cycloalkyl or aryl group having up to 12 carbon atoms. Optional substituents include for example halogen atoms and alkyl, alkoxy, haloalkyl, haloalkoxy, hydroxy, cyano, nitro, amino, carboxy, alkoxycarbonyl, phenyl and phenoxy groups, any alkyl moiety present preferably having up to 4 carbon atoms.

Further suitable substituted ammonium salts include those in which the nitrogen atom forms part of a saturated or unsaturated ring, which may also contain one or more additional hetero-atoms, epsecially nitrogen, oxygen and/or sulphur atoms. Typical salts of this type are pyridinium, pyrrolidinium, piperidinium and morpholinium salts.

Further suitable salts include those with polymeric substances containing basic groups, such as ion exchange resins. Such salts can be especially useful in applications where insoluble materials are required.

Suitable esters of the acid I include optionally substituted alkyl, cycloalkyl and aryl esters, where the preferred optional substituents are as described above. Preferred esters are unsubstituted alkyl esters preferably having up to 4 carbon atoms in the alkyl moiety.

Especially preferred for use in the invention are compositions containing salts of the free acid I, the most prefered salt being the mono sodium salt.

It will be appreciated that the compounds I contain an asymmetric carbon atom and hence will exist in two optically isomeric forms. Both optical isomers, together with mixtures of these isomers, such as racemic mixtures, may be used in this invention.

The weight ratio of the compound I to the compound II may vary widely depending on the intended application. For example said ratio may be in the range of from 1:20 to 20:1, especially 5:1 to 1:5. Suitably the dosage of each compound applied is in the range of from 0.05 to 4kg/ha. For example, a dosage of 0.05 to 2.5kg/ha, especially 0.2 to 1.0kg/ha, of the compound I may be applied together with 0.05 to 4kg/ha especially 0.5 to 2.0kg/ha, of compound II.

In another aspect, the invention also provides a method for combating fungus at a locus, which comprises treating the locus with a compound I and compound II as defined above. The present invention is of wide applicability in the protection of crop plants against fungal attack, for example plants susceptible to downy mildews. The present invention is of particular value in the protection of vines against vine downy mildew, Plasmopara viticola.

The fungicidal composition of the invention preferably also contains a carrier. A carrier in a composition according to the invention is any material with which the active ingredients are formulated to facilitate application to the locus to be treated, which may for example be a plant, seed or soil, or to facilitate storage, transport or handling. A carrier may be a solid or a

liquid, including a material which is normally gaseous but which has been compressed to form a liquid, and any of the carriers normally used in formulating fungicidal compositions may be used. Suitable carriers for use in the compositions according to the invention are in general the same carriers useful for formulating the compounds I alone. Preferably the compositions according to the invention contain from 0.5 to 95% by weight of total active ingredient.

Suitable solid carriers include natural silicas such as diatomaceous earths; magnesium silicates, for example talcs; magnesium aluminium silicates, for example attapulgites and vermiculites; aluminium silicates, for example kaolinites, montmorillonites and micas; calcium carbonate; calcium sulphate; ammonium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes, for example beeswax, paraffin wax, and chlorinated mineral waxes; and solid fertilisers, for example superphosphates.

Suitable liquid carriers include water; alcohols, for example isopropanol and glycols; ketones, for example acetone, methyl ethyl ketone, methyl isobutyl ketone and cyclohexanone; ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Fungicidal compositions are often formulated and transported in a concentrated form which is subsequently diluted by the user before application. The presence of small amounts of a carrier which is a surface-active agent facilitates this process of dilution. Thus preferably at least one carrier in a composition

according to the invention is a surface-active agent. For example, a composition may contain at least two carriers, at least one of which is a surface-active agent.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions of the invention may for example be formulated as wettable powders, dusts, granules, solutions, emulsifiable concentrates, emulsions, suspension concentrates and aerosols. Wettable powders usually contain 25, 50 or 75%w of active ingredient and usually contain, in addition to solid inert carrier, 3-10%w of a dispersing agent and, where necessary, 0-10%w of stabiliser(s) and/or other additives such as penetrants or stickers. Dusts are usually formulated as a dust concentrate having a similar composition to that of a wettable powder but without a dispersant, and may be diluted in the field with further solid carrier to give a composition usually containing ½-10%w of active ingredient. Granules are usually prepared to

have a size between 10 and 100 BS mesh (1.676 -0.152 mm), and may be manufactured by agglomeration or impregnation techniques. Generally, granules will contain ½-25%w active ingredient and 0-10%w of additives such as stabilisers, slow release modifiers and binding agents. Emulsifiable concentrates usually contain, in addition to a solvent and, when necessary, co-solvent, 10-50%w/v active ingredient, 2-20%w/v emulsifiers and 0-20%w/v of other additives such as stabilisers, penetrants and corrosion inhibitors. Suspension concentrates are usually compounded so as to obtain a stable, non-sedimenting flowable product and usually contain 10-75%w active ingredient, 0.5-15%w of dispersing agents, 0.1-10%w of suspending agents such as protective colloids and thixotropic agents, 0-10%w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as antifreeze agents for water.

The compositions may also contain other ingredients, for example other compounds possessing pesticidal, especially insecticidal, acaricidal, herbicidal or fungicidal, properties.

Aqueous dispersions and emulsions, for example compositions obtained by diluting a wettable powder or a concentrate according to the invention with water, also lie within the scope of the present invention. The said emulsions may be of the water-in-oil or of the oil-in-water type, and may have a thick 'mayonnaise'- like consistency.

The following Examples illustrate the invention.

EXAMPLE 1

The fungicidal and phytotoxic effects of the sodium salt of N-hydroxy-N-formylalanine in admixture with N-(trichloromethylthio)phthalimide were compared to those of the N-hydroxy-N-formylalanine salt alone using the following procedure. The test solutions were sprayed onto adult, fruit-bearing grapevines (cv

Sauvignon) at 18 day intervals during June, July and August. Four replicate plots were treated. Controls were left untreated.

The test solutions contained the active ingredient(s), distilled water and 100ppm of Tween 20 surfactant (Trade mark).

Seven days after the first spray application and 13 days after the third spray application the vines were innoculated with a spore suspension containing Plasmopara viticola.

Assessments of the disease level and phytotoxicity were made 19 days after the 1st treatment, and then after a further 4 weeks (11 days after the 3rd treatment).

The results of this test are shown in Table 1.

The extent of disease control in the test is expressed as a percentage of the disease level occuring on the control vines.

Phytotoxicity is expressed as a mean rating compared with the control according to the criteria,

0 = absolutely no phytotoxicity
1 = doubtful occurence of phytotoxicity
2 = distinct, but very slight phytotoxicity
3,4 = slight to moderate phytotoxicity
5 = phytotoxicity of an unacceptable degree.

It can be seen from the results in Table I that the addition of N-(trichloromethylthio)phthalimide to a given dosage of the sodium salt of N-hydroxy-N-formylalanine reduced the slight phytotoxicity occuring to a very low level indeed. Disease control by the mixture was very good.

TABLE I

| TREATMENTS | | ASSESSMENTS | | | |
|---|---|---|---|---|---|
| | | 19 days after 1st application | | 11 days after 3rd application | |
| sodium salt of N-hydroxy-N-formyl-alanine (ppm) | N-(trichloromethylthio)-phthalimide (ppm) | DISEASE | PHYTOTOXICITY | DISEASE | PHYTOTOXICITY |
| 500 | 0 | 17.6 | 2.0 | 14.4 | 1.5 |
| 250 | 0 | 34.7 | 0.5 | 26.8 | 0.8 |
| 500 | 1000 | 4.9 | 0.8 | 6.9 | 1.0 |
| 250 | 1000 | 24.7 | 0.3 | 11.1 | 0.5 |
| 0 (Control) | 0 | 100.0 | 0 | 100.0 | 0 |

EXAMPLE 2

Tests were carried out as follows.

Leaf discs of grapevine (cv. Cabernet Sauvignon) 23mm in diameter, were supported on water agar in petri dishes, and sprayed with various aqueous test preparations. After the spray had dried, the discs were inoculated with Plasmopara viticola. The dishes were closed and incubated for 7 days at 21°C. At the end of this period, the percentage area of each disc covered with sporulating downy mildew was estimated, and compared with that on inoculated, untreated control discs.

The test results are given in Table 2. In this Table, the theorectical degree of disease suppression, assuming that the two fungicides act independently (i.e. additively) is calculated using the formula:

$$\text{Theorectical value of disease suppression} = x + \frac{y(100-x)}{100}$$

where x and y are the activities of the two components used separately. If the actual degree of disease suppression (as measured in the test) is greater than the calculated value, then the two fungicides have interacted synergistically.

Examination of the results in Table 2 show that in all cases, the actual degree of disease suppression is greater than the calculated degree, indicating synergistic action of the two test materials.

TABLE 2

| TREATMENT | | |
|---|---|---|
| Sodium salt of N-hydroxy-N-formylalanine (ppm in spray) | N-(trichloromethylthio) phthalimide (ppm in spray) | Disease Suppression (% of control) Actual Calculated |
| 7.5 | 0 | -8.1 |
| 15.0 | 0 | -2.7 |
| 30.0 | 0 | 37.8 |
| 0 | 1 | -16.2 |
| 0 | 5 | -2.7 |
| 0 | 10 | 82.4 |
| 7.5 | 1 | 27.0 -25.6 |
| 7.5 | 5 | 48.6 -11.0 |
| 7.5 | 10 | 89.5 80.9 |
| 15.0 | 1 | 4.1 -19.3 |
| 15.0 | 5 | 23.0 -5.5 |
| 15.0 | 10 | 93.8 81.9 |
| 30.0 | 1 | 35.1 27.8 |
| 30.0 | 5 | 83.2 36.1 |
| 30.0 | 10 | 99.2 89.0 |

EXAMPLE 3 Formulation Example.

A formulation having the following composition was prepared.

| | |
|---|---|
| Sodium salt of N-hydroxy-N-formylalanine | 65g |
| N-(trichloromethylthio)phthalimide | 410g |
| Silica | 55g |
| China Clay | 350g |

| | |
|---|---|
| Ammonium sulphate | 65g |
| Surfactants | 55g |

Rooted cuttings of grapevine (cv Cabernet Sauvignon) were sprayed with an aqueous suspension of the above formulation containing 200ppm of the sodium salt of N-hydroxy-N-formylalanine. Nine days later, the plants were inoculated with Plasmopara viticola, and then kept for 6 days at 20-22°C in high humidity. After this period of time, the extent of the disease was compared wth inoculated untreated control plants. It was found that the extent of the disease had been reduced by 92.5%.

K 1853

CLAIMS

1. A fungicidal composition which comprises a compound I which is N-hydroxy-N-formylalanine or a salt or an ester thereof, together with compound II, N-(trichloromethylthio)phthalimide.
2. A composition as claimed in claim 1, in which the compound I is a salt of the free acid.
3. A composition as claimed in claim 2, in which the compound I is the mono sodium salt of N-hydroxy-N-formylalanine.
4. A composition as claimed in any one of claims 1, 2 and 3 which also comprises one or more carriers.
5. A composition as claimed in claim 1, substantially as described in the Examples herein.
6. A method of combating fungal growth at a locus, which comprises applying to the locus a compound I as defined in any one of claims 1 to 3 together with compound II as defined in claim 1.
7. A method as claimed in claim 6, in which the compounds I and II are applied in the form of a composition as claimed in any one of claims 1 to 5.
8. A method as claimed in claim 6 or claim 7, in which the locus treated is a crop area.
9. A method as claimed in claim 8, in which the crop area contains vines.

European Patent Office

# EUROPEAN SEARCH REPORT

0082577

Application number

EP 82 20 1635

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| | "No relevant documents have been disclosed"<br>----- | | A 01 N 47/04 //<br>(A 01 N 47/04<br>A 01 N 37/46 ) |
| | | | TECHNICAL FIELDS SEARCHED (Int. Cl. 3) |
| | | | A 01 N |
| | The present search report has been drawn up for all claims | | |

| Place of search | Date of completion of the search | Examiner |
|---|---|---|
| THE HAGUE | 23-03-1983 | DECORTE D. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82